(19) Europäisches Patentamt / European Patent Office / Office européen des brevets

(11) **EP 4 450 199 A1**

(12) **EUROPÄISCHE PATENTANMELDUNG**

(43) Veröffentlichungstag:
**23.10.2024   Patentblatt 2024/43**

(21) Anmeldenummer: **23168435.8**

(22) Anmeldetag: **18.04.2023**

(51) Internationale Patentklassifikation (IPC):
**B23K 9/09** (2006.01)     **B23K 9/095** (2006.01)
**B23K 9/10** (2006.01)     **B23K 9/12** (2006.01)
**B23K 9/173** (2006.01)

(52) Gemeinsame Patentklassifikation (CPC):
**B23K 9/095; B23K 9/093; B23K 9/1068;**
**B23K 9/124; B23K 9/1735**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **FRONIUS INTERNATIONAL GmbH
4643 Pettenbach (AT)**

(72) Erfinder: **Söllinger, Dominik
4600 Wels-Thalheim (AT)**

(74) Vertreter: **Patentanwälte Pinter & Weiss OG
Prinz-Eugen-Straße 70
1040 Wien (AT)**

(54)   **MEHRFACH-LICHTBOGENFÜGEVERFAHREN UND FÜGEANORDNUNG**

(57)   Um bei einem Mehrfach-Lichtbogenfügeverfahren die Herstellung von geschuppten Nahtbildern zu ermöglichen, ist vorgesehen, dass in jedem Lichtbogenfügeprozess zumindest ein Fügeparameter ($FPa$, $FPb$), der eine von der Drahtvorschubgeschwindigkeit ($v_{Da}$, $v_{Db}$) und dem Fügedraht (5a, 5b) abhängige Abschmelzleistung A des Lichtbogenfügeprozesses beeinflusst, mit einer periodischen Variationsfunktion ($V_a$, $V_b$) mit einer Variationsfrequenz ($fv$) variiert wird, sodass in Folge dieses Variierens in jedem Lichtbogenfügeprozess der vorgegebene zeitliche Verlauf der Drahtvorschubgeschwindigkeit ($v_{Da}$, $v_{Db}$) und der vorgegebene zeitliche Verlauf des Fügestromes ($I_{Fa}$, $I_{Fb}$) in Abhängigkeit von der Variationsfunktion ($V_a$, $V_b$) periodisch variiert wird.

FIG. 7

**Beschreibung**

Die gegenständliche Erfindung betrifft ein Mehrfach-Lichtbogenfügeverfahren mit dem gleichzeitig eine Mehrzahl von Lichtbogenfügeprozessen ausgeführt werden, um an einem Werkstück eine Fügenaht herzustellen, wobei während der Ausführung des Mehrfach-Lichtbogenfügeverfahrens zur Umsetzung jedes der beteiligten Lichtbogenfügeprozesses zumindest zeitweise ein Lichtbogen zwischen einer Fügeelektrode und dem Werkstück brennt und zumindest zeitweise ein elektrischer Fügestrom über die Fügeelektrode fließt und ein Fügedraht mit einer Drahtvorschubgeschwindigkeit zum Lichtbogen bewegt wird, wobei jeder der beteiligten Lichtbogenfügeprozesse mit einem vorgegebenen zeitlichen Verlauf von Fügeparametern ausgeführt wird und der zeitliche Verlauf der Fügeparameter zumindest einen vorgegebene zeitlichen Verlauf des Fügestromes und einen vorgegebenen zeitlichen Verlauf der Drahtvorschubgeschwindigkeit, die voneinander abhängig sind, umfassen. Die Erfindung betrifft auch eine zugehörige Fügeanordnung zur Umsetzung eines solchen Mehrfach-Lichtbogenfügeverfahrens.

Schweißverfahren können unterschieden werden, zwischen Schweißverfahren mit abschmelzender Elektrode und Schweißverfahren mit nicht abschmelzender Elektrode. Beispiele von Schweißverfahren mit abschmelzender Elektrode sind das Metall-Schutzgas-Schweißverfahren (MSG) und von Schweißverfahren mit nicht abschmelzender Elektrode das Wolfram Inertgas Schweißverfahren (WIG). Bei einem Schweißverfahren mit nicht abschmelzender Elektrode wird üblicherweise ein Schweißdraht als Zusatzwerkstoff beim Schweißen verwendet, der dem Lichtbogen zugeführt wird und im Lichtbogen abschmilzt. Bei einem Schweißverfahren mit abschmelzender Elektrode bildet der Schweißdraht gleichzeitig auch die Elektrode aus, wobei aber dem Lichtbogen auch ein zusätzlicher Schweißdraht zugeführt werden könnte.

Metall-Schutzgas-Schweißverfahren (MSG), zu denen z.B. das Metall-Inert-Gas Verfahren (MIG) oder auch das Metall-Aktiv-Gas Verfahren (MAG) zählen, sind seit vielen Jahren im Stand der Technik bekannt. Beim MSG-Schweißen wird eine abschmelzende Elektrode aus einem metallischen Elektrodenwerkstoff von einem sogenannten Schutzgas umgeben, um die Schweißstelle vom schädlichen Einfluss der Umgebungsluft abzuschirmen.

Allgemein wird beim Lichtbogenschweißen mittels einer elektrischen Schweißspannung bzw. einem daraus resultierenden elektrischen Schweißstrom ein Lichtbogen zwischen der Elektrode und dem zu schweißenden Werkstück gezündet. Bei einem Schweißverfahren mit abschmelzender Elektrode schmilzt der Lichtbogen die Elektrode und den, die Elektrode umgebenden Bereich des Werkstückes, wodurch eine stoffschlüssige Verbindung hergestellt wird. Als Elektrodenmaterial wird üblicherweise dasselbe oder ein ähnliches Material wie für das Werkstück verwendet. Die Elektrode wird mit einer bestimmten Vorschubgeschwindigkeit der Schweißstelle zugeführt, wobei die Vorschubgeschwindigkeit fest vorgegeben werden kann, z.B. beim manuellen Schweißen per Hand oder durch Einstellung am Schweißgerät, oder auch von anderen Parametern abhängig sein kann, beispielsweise vom implementierten Schweißverfahren, von einer Schweißgeschwindigkeit, mit der die Elektrode relativ zum Grundwerkstoff bewegt wird oder in Abhängigkeit des Schweißstroms, etc.

Es sind beim Lichtbogenschweißen auch verschiedene Schweißprozesse hinlänglich bekannt. Unter einem Schweißprozess wird im Wesentlichen die Steuerung des zeitlichen Verlaufs der Schweißspannung und/oder des Schweißstromes verstanden. Beispiele für einen bekannten Schweißprozess sind ein Impulsschweißprozess oder ein Intervallschweißprozess oder ein Schweißprozess mit einem Sprühlichtbogen. Beim Impulsschweißprozess wird einer Grundspannung regelmäßig eine demgegenüber erhöhte Schweißspannung überlagert, wodurch sich mit vorgegebener Frequenz und Impulszeit ein Grundstrom und ein Pulsstrom abwechseln. Mit einem Impulsschweißprozess kann der Wärmeeintrag in das Werkstück verringert werden, was in vielen Anwendungsfällen sehr vorteilhaft ist. Beim Intervallschweißprozess wechseln sich Schweißphasen und Pausenphasen zyklisch ab, wobei ein Schweißzyklus aus einer Schweißphase und einer Pausenphase besteht. Der Übergang zwischen einer Schweißphase und einer Pausenphase ist durch eine Ablösung eines geschmolzenen Tropfens der Elektrode gekennzeichnet. Dem geht oftmals ein Kurzschluss vorher, indem die Elektrode in Kontakt mit dem Schmelzbad gerät. Der Schweißstrom kann in der Schweißphase oder auch in der Pausenphase einen gewünschten zeitlichen Verlauf haben, beispielsweise ein pulsartiger Schweißstrom während der Schweißphase. Ein Beispiel eines solchen Intervallschweißprozesses ist das bekannte Cold Metal Transfer (CMT) Schweißverfahren, bei dem zusätzlich während des Schweißens auch der Drahtvorschub der Elektrode dynamisch verändert wird. Auch mit einem Intervallschweißprozess kann der Wärmeeintrag in das Werkstück verringert werden, was in vielen Anwendungsfällen sehr vorteilhaft ist. Daneben gibt es noch eine Reihe anderer Schweißverfahren. In einem Schweißprozess mit Sprühlichtbogen wird üblicherweise mit einem gleichbleibenden Schweißstrom und ohne Kurzschlussunterbrechung geschweißt. Der Sprühlichtbogen erzeugt einen hohen Wärmeeintrag in das Werkstück, eine hohe Abschmelzleistung und einen tiefen Einbrand.

Neben dem Schweißen ist auch das Lichtbogenlöten als Fügeverfahren bekannt. Das Lichtbogenlöten unterscheidet sich von einem Lichtbogenschweißen dadurch, dass beim Schweißen das zu schweißende Werkstück aufgeschmolzen wird, beim Lichtbogenlöten hingegen nicht. Beim Lichtbogenlöten wird nur das Lötlot geschmolzen. Ein Verfahren zum Lichtbogenlöten kann mit denselben Geräten wie beim Lichtbogenschweißen betrieben werden. Auch beim Lichtbogenlöten kann zwischen Lötverfahren mit abschmelzender Elektrode, die als Lot verwendet wird, und Lotverfahren mit nicht abschmelzender Elektrode unterschieden werden. Ebenso sind das MSG-Löten und das WIG-Löten bekannt. Auch die Lötverfahren können analog zu den Lichtbogenschweißverfahren ausgeführt sein, wie als Intervalllötverfahren oder Impulslötverfahren oder Lötverfahren mit Sprühlichtbogen. Der Unterschied zum Schweißen ist, dass beim Löten mit niedrigeren Lötströmen und/oder niedrigeren Lötspannungen gearbeitet wird, weil das Werkstück beim Löten nicht aufgeschmolzen werden soll.

Es wird daher in weiterer Folge nur mehr allgemein vom Lichtbogenfügen oder einem Lichtbogenfügeverfahren gesprochen, wobei im Sinne der Erfindung darunter ein Lichtbogenschweißen oder ein Lichtbogenschweißverfahren bzw. ein Lichtbogenlöten oder Lichtbogenlötverfahren verstanden wird. Ebenso ist ein Fügestrom als Schweißstrom oder Lötstrom zu verstehen, der durch die Elektrode fließt, indem an die Elektrode eine Fügespannung (Schweißspannung oder Lötspannung) angelegt wird.

Das Fügeverfahren wird mit einem Fügegerät ausgeführt, das in der Regel als ein herkömmliches Schweißgerät ausgestaltet ist. Das Fügegerät umfasst eine Stromquelle zum Erzeugen der Fügespannung und des Fügestromes und einen Elektrodenhalter, beispielsweise ein Schweißbrenner, in dem die Fügeelektrode geführt oder gehalten wird. Das Fügegerät umfasst ferner einen Drahtvorschub zum Bewegen des Fügedrahtes, der bei einem Fügeverfahren mit abschmelzender Elektrode gleichzeitig die Fügeelektrode ausbildet.

Die Erfindung betrifft insbesondere ein Lichtbogenfügeverfahren, bei dem zum Fügen zumindest zeitweise ein Lichtbogen zwischen einer Elektrode und dem zu fügenden Werkstück brennt und ein Fügedraht dabei abgeschmolzen wird.

Um die Fügeleistung zu erhöhen, sind auch Mehrfach-Lichtbogenfügeverfahren bekannt geworden, bei denen mit zumindest zwei Lichtbogenfügeprozesse gleichzeitig gefügt wird. Dazu zählt z.B. das sogenannte Tandem-Impulsfügeverfahren, bei dem zwei Impuls-Lichtbogenfügeprozesse gleichzeitig durchgeführt werden. Dabei schmelzen zum Fügen zumindest zwei Fügeelektroden in Form von Schweißdrähten oder Lötdrähten in einem Lichtbogen ab. In der Regel wird hierfür für jeden Impuls-Lichtbogenfügeprozess ein eigenes Fügegerät verwendet. Mit jedem Fügegerät wird ein Impuls-Lichtbogenfügeprozess realisiert, indem die jeweilige Steuerungseinheit des Fügegeräts die Fügeparameter entsprechend steuert bzw. regelt, also insbesondere den Fügestrom, die Fügespannung, die Drahtvorschubgeschwindigkeit und optional auch die Schutzgasmenge. Um eine allfällige negative gegenseitige Beeinflussung der gleichzeitig ablaufenden Impuls-Lichtbogenfügeprozesse zu verhindern, was die Fügequalität vermindern kann, ist auch bekannt, dass die beiden Impuls-Lichtbogenfügeprozesse zeitlich synchronisiert werden. Beispiele von Mehrfach-Schweißverfahren mit synchronisierten Schweißprozessen finden sind in WO2020/8187 A1 oder WO2022/129122 A1. Beim Fügen mittels Lichtbogenschweißen oder Lichtbogenlöten ist oftmals auch ein bestimmtes Nahtbild der Fügenaht gewünscht. Grundsätzlich kann zwischen einem kontinuierlichen Nahtbild und einen geschuppten Nahtbild unterschieden werden. Beim kontinuierlichen Nahtbild ergibt sich eine im Wesentlichen ebene Oberfläche der Fügenaht. Bei einem geschuppten Nahtbild sind hingegen klar Schuppen an der Oberfläche erkennbar, die sich entlang der Fügenaht in Form von sichelmondförmigen Raupen ausbilden. Mit einem geschuppten Nahtbild kann insbesondere das Ausgasen von Wasserstoff, Sauerstoff und anderen Gasen aus der Fügenaht während des Fügens unterstützt werden, was zu einer Reduzierung der Porenbilden in der Fügenaht beiträgt. Beim Schweißen wird zusätzlich auch die Durchmischung vom unterschiedlichen Temperaturzonen im Schmelzbad erhöht, was die Schweißnahtkontinuität und damit Schweißqualität erhöht. Ein geschupptes Nahtbild wird beispielsweise beim Aluminiumschweißen aber auch beim Schweißen von CrNi-Stählen angestrebt.

Bei einem Einfach-Lichtbogenfügeverfahren, bei dem nur mit einer Fügeelektrode und einem Lichtbogenfügeprozess gefügt wird, lässt sich eine geschuppte Fügenaht in bekannter Weise realisieren, indem die Abschmelzleistung des implementierten Fügeprozesses zyklisch mit einer gleichbleibenden Frequenz verändert wird. Durch die zyklische Änderung der Abschmelzleistung ergibt sich eine geschuppte Fügenaht. Einer der großen Nachteile dabei ist jedoch, dass durch die zyklische Reduzierung der Abschmelzleistung, die Fügegeschwindigkeit und auch die mittlere Abschmelzleistung geringer ist wie bei Fügenähten welche ein kontinuierliches Nahtbild besitzen. Es kann im Falle einer geschuppten Fügenaht damit nur langsamer gefügt werden. Dadurch ist die Wirtschaftlichkeit solcher Fügenähte oftmals nicht immer gegeben.

In einem Mehrfach-Lichtbogenfügeverfahren, mit dem die Fügeleistung an sich erhöht werden kann, kann aber die Abschmelzleistung eines beteiligten Lichtbogenfügeprozesses nicht einfach zyklisch geändert werden, weil das die beteiligten Lichtbogenfügeprozesse negativ beeinflussen kann. Es kann dabei zu instabilen Lichtbogenfügeprozessen, Fügefehlern, Spritzern von Drahtmaterial am Grundwerkstoff, Lichtbogenabrissen, Bindefehler, starke gegenseitige Lichtbogenablenkungen usw. kommen. Mit einem Mehrfach-Lichtbogenfügeverfahren konnten daher bis jetzt keine geschuppten Nahtbilder erzeugt werden.

Es ist daher eine Aufgabe der gegenständlichen Erfindung, ein Mehrfach-Lichtbogenfügeverfahren und eine Fügeanordnung zur Umsetzung eines Mehrfach-Lichtbogenfügeverfahrens anzugeben, mit denen die Herstellung von geschuppten Nahtbildern möglich wird.

Diese Aufgabe wird erfindungsgemäß dadurch gelöst, dass in jedem Lichtbogenfügeprozess zumindest ein Fügeparameter, der eine von der Drahtvorschubgeschwindigkeit und dem Fügedraht abhängige Abschmelzleistung des Lichtbogenfügeprozesses beeinflusst, mit einer periodischen Variationsfunktion mit einer Variationsfrequenz variiert wird, sodass in Folge dieses Variierens in jedem Lichtbogenfügeprozess der vorgegebene zeitliche Verlauf der Drahtvorschubgeschwindigkeit und der vorgegebene zeitliche Verlauf des Fügestromes in Abhängigkeit von der Variationsfunktion periodisch variiert wird. Die Variationsfrequenz ist dabei in jeder Variationsfunktion gleich. Damit werden der vorgegebene zeitliche Verlauf der Drahtvorschubgeschwindigkeit und der vorgegebene zeitliche Verlauf des Fügestromes mit gleicher Frequenz, der Variationsfrequenz, variiert. Das erlaubt die Herstellung des gewünschten geschuppten Nahtbildes mit einem Mehrfach-Lichtbogenfügeverfahren, ohne den oben erwähnten negativen Beeinflussungen.

Wenn jeder beteiligte Lichtbogenfügeprozess mit vorgegebenen zyklisch mit einer Zyklusfrequenz wiederholten Fügezyklen ausgeführt wird, wird die kleinste Zyklusfrequenz eines beteiligten Lichtbogenfügeprozesses mit dem 2-fache bis 50-fache der Variationsfrequenz gewählt. Damit erfolgt die Variation der Fügeparameter erheblich langsamer als die Zyklusfrequenzen der Lichtbogenfügeprozesse, was die Durchführung der Lichtbogenfügeprozess wenig stört.

Insbesondere bei einem Mehrfach-Lichtbogenfügeverfahren mit mehr als drei gleichzeitig ausgeführten Lichtbogenfügeprozess ist es vorteilhaft, wenn die Variationsfunktionen der Lichtbogenfügeprozesse zeitlich aufeinander synchronisiert werden. Damit kann verhindert werden, dass sich die Lichtbogenfügeprozesse durch die Variation der Fügeparameter gegenseitig negativ beeinflussen. Bei zwei Lichtbogenfügeprozesse besteht immer ein bestimmter zeitlicher Bezug der Variationsfunktionen und es wird mit der Synchronisation verhindert, dass sich der zeitliche Bezug während der Ausführung des Mehrfach-Lichtbogenfügeverfahren ändert, was den Fügeprozess negativ beeinflussen könnte.

Die gegenständliche Erfindung wird nachfolgend unter Bezugnahme auf die Figuren 1 bis 8 näher erläutert, die beispielhaft, schematisch und nicht einschränkend vorteilhafte Ausgestaltungen der Erfindung zeigen. Dabei zeigt

Fig.1 eine Fügeanordnung zur Umsetzung eines Mehrfach-Lichtbogenfügeverfahren,
Fig.2 ein Mehrfach-Lichtbogenfügeverfahren mit Impuls-Lichtbogenfügeprozessen,
Fig.3 ein Mehrfach-Lichtbogenfügeverfahren mit Intervall-Lichtbogenfügeprozessen,
Fig.4 eine Schweißnaht mit geschuppten Nahtbild,
Fig.5 Beispiele von Variationsfunktionen,
Fig.6 ein erfindungsgemäßes Mehrfach-Lichtbogenfügeverfahren mit Lichtbogenfügeprozessen mit einer Variationsfunktion mit variierten Fügeparametern,
Fig.7 ein Ausführungsbeispiel mit zeitlich versetzten Variationsfunktionen und
Fig.8 eine Durchführung des erfindungsgemäßen Mehrfach-Lichtbogenfügeverfahren.

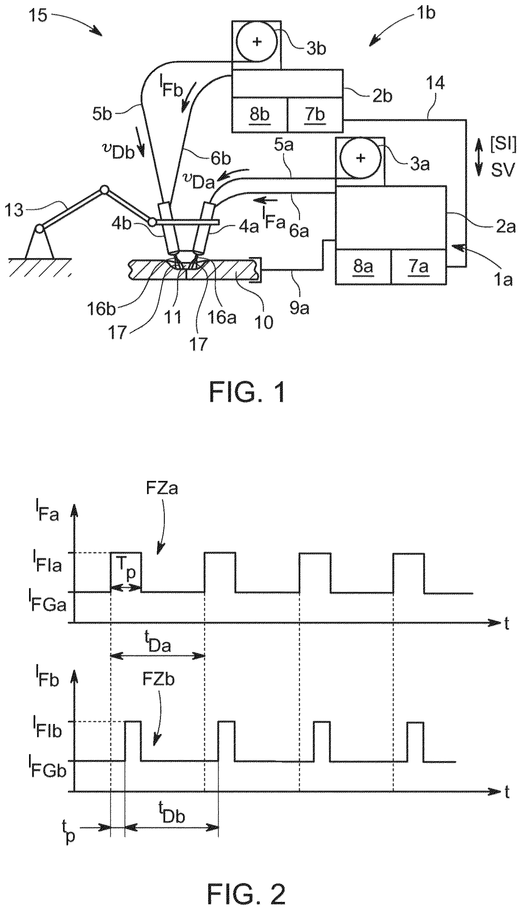

In Fig.1 ist eine mögliche Fügeanordnung 15 für ein Mehrfach-Lichtbogenfügeverfahren schematisch dargestellt. Die Fügeanordnung 15 umfasst zwei separate Fügegeräte 1a, 1b mit jeweils einer Stromquelle 2a, 2b, einer Drahtvorschubeinheit 3a, 3b und einem Fügeelektrodenhalter 4a, 4b (beispielsweise jeweils ein Schweißbrenner) vorgesehen. Die Stromquellen 2a, 2b stellen jeweils die benötigte Fügespannung und den benötigen Fügestrom zur Verfügung, die jeweils an den Fügedraht 5a, 5b, als abschmelzende Fügeelektrode 16a, 16b des Fügeverfahrens, angelegt wird. Dazu kann in einem Fügeelektrodenhalter 4a, 4b beispielsweise eine Kontakthülse vorgesehen sein, an die die Fügespannung angelegt wird, z.B. über eine elektrische Zuführleitung 6a, 6b zwischen der Stromquelle 2a, 2b und der Kontakthülse, und die vom Fügedraht 5a, 5b elektrisch kontaktiert wird. Es kann aber auch ein Fügeelektrodenhalter 4a, 4b mit einer nicht abschmelzenden Fügeelektrode 16a, 16b (z.B. zur Implementierung eines WIG-Verfahrens) verwendet werden, an die die Fügespannung über die Zuführleitung 6a, 6b angelegt wird. In diesem Fall wird der Fügedraht 5a, 5b mit der Drahtvorschubeinheit 3a, 3b in den Lichtbogen 17 zwischen der nicht abschmelzenden Fügeelektrode und dem Werkstück 10 brennenden Lichtbogen 17 zugeführt.

Damit fließt beim Fügen jeweils zumindest zeitweise ein bestimmter Fügestrom $I_{Fa}$, $I_{Fb}$ über die jeweilige Fügeelektrode 16a, 16b, wobei hierfür zum Schließen des Stromkreises natürlich in bekannter Weise eine, in Fig.1 nur für ein Fügegerät 1a dargestellte, Masseleitung 9a zwischen der Stromquelle 2a, 2b und dem des Werkstückes 10 vorgesehen ist.

Der Fügedraht 5a, 5b wird in jedem Fügegerät 1a, 1b von der Drahtvorschubeinheit 3a, 3b jeweils mit einer bestimmten Drahtvorschubgeschwindigkeit $v_a$, $v_b$ gefördert. Die Drahtvorschubeinheit 3a, 3b kann jeweils im Fügegerät 1a, 1b integriert sein, kann aber auch eine separate Einheit sein oder auch an einer anderen Stelle angeordnet sein, beispielsweise im oder am Fügeelektrodenhalter 4a, 4b.

Der Fügedraht 5a, 5b und die elektrische Zuführleitung 6a, 6b eines Fügegerätes 1a, 1b, und gegebenenfalls auch weitere Leitungen zwischen der Stromquelle 2a, 2b und dem Fügeelektrodenhalter 4a, 4b (beispielsweise eine Steuerleitung, eine Schutzgasleitung oder eine Kühlmittelleitung), können auch in einem gemeinsamen Schlauchpaket geführt sein. Das Schlauchpaket kann an den Fügeelektrodenhalter 4a, 4b und an die Stromquelle 2a, 2b über geeignete Kupplungen, vorzugsweise lösbar, angekoppelt werden.

In einem Fügegerät 1a, 1b ist auch eine Steuereinheit 7a, 7b vorgesehen, die den auszuführenden Fügeprozess steuert und überwacht. Hierfür können auch Messeinheiten (nicht dargestellt) vorgesehen sein, die einen Fügeparameter, wie eine Fügespannung oder einen Fügestrom, erfassen und der Steuereinheit 7a, 7b zur Verfügung stellen. Zur Umsetzung des gewünschten Fügeprozesses sind in der Steuereinheit 7a, 7b benötigte Fügeparameter, wie beispielsweise eine Zyklusfrequenz, die Drahtvorschubgeschwindigkeit, die Werte der Fügeströme, etc., vorgegeben oder einstellbar. Zur Eingabe oder zur Anzeige gewisser Fügeparameter oder zur Anzeige eines Fügestatus kann auch eine Eingabe-/Ausgabeeinheit 8a, 8b vorgesehen sein.

Üblicherweise wird von einer Steuereinheit 7a, 7b in jedem Fügegerät 1a, 1b auch der zeitliche Verlauf des Fügestromes zur Umsetzung eines Lichtbogenfügeprozesses mit dem jeweiligen Fügegerät 1a, 1b kontrolliert. Der zeitliche Verlauf des Fügestromes wird über die Regelung der Fügespannung eingestellt. Das kann aber auch umgekehrt sein, also Vorgabe des zeitlichen Verlaufs der Fügespannung und Regelung des Fügestromes. Zur Regelung wird zu jedem Zeitschritt der Regelung, typischerweise im Mikrosekunden bis Millisekundenbereich, üblicherweise auch ein Istwert der Regelung benötigt, also beispielsweise ein Istwert der Fügespannung oder des Fügestromes.

Die Steuereinheit 7a, 7b ist in der Regel im Fügegerät 1a, 1b integriert und als mikroprozessorbasierte Hardware ausgeführt, auf der Software ausgeführt wird, die die benötigen Funktionen des Fügegeräts 1a, 1b, beispielsweise die Regelung des Fügestromes oder der Fügespannung, realisiert. Die Steuereinheit 7a, 7b könnte aber auch als externes Gerät des Fügegeräts 1a, 1b ausgeführt sein. Ebenso könnte die Steuereinheit 7a, 7b auch anders implementiert sein, beispielsweise als integrierter Schaltkreis (wie eine anwendungsspezifische integrierte Schaltung (ASIC) oder Field Programmable Gate Array (FPGA)) oder in Form einer elektrischen oder elektronischen Schaltung.

Solche Fügeanordnungen 15 und solche Fügegeräte 1a, 1b sind natürlich hinlänglich bekannt, weshalb diese hier nicht näher beschrieben werden. Als Fügegerät 1a, 1b kann beispielsweise ein herkömmliches Schweißgerät verwendet werden, mit dem sowohl ein Schweißprozess, als auch ein Lötprozess realisiert werden kann. Für ein Mehrfach-Lichtbogenfügeverfahren mit mehr als zwei Fügeprozessen sind natürlich entsprechend mehr Fügegeräte 1a, 1b vorgesehen. Mehrere Fügegeräte 1a, 1b eines Mehrfach-Lichtbogenfügeverfahrens, gegebenenfalls auch mit den zugehörigen Drahtvorschubeinheiten 3a, 3b, können auch in einem gemeinsamen Gehäuse angeordnet sein.

Zur Realisierung eines Mehrfach-Lichtbogenfügeverfahren sind die beiden Fügeelektrodenhalter 4a, 4b im gezeigten Ausführungsbeispiel örtlich relativ zueinander angeordnet, sodass diese in dieselbe Fügenaht 11 an einem Werkstück 10 arbeiten. Diese Anordnung der Fügeelektrodenhalter 4a, 4b zueinander kann fix sein, beispielsweise in dem beide Fügeelektrodenhalter 4a, 4b an einem Schweißroboter 13 in einem fixen örtlichen Bezug zueinander angeordnet werden. Der Schweißroboter 13 führt dann die beiden Fügeelektrodenhalter 4a, 4b (so wie in Fig.1 angedeutet). Die beiden Fügeelektrodenhalter 4a, 4b können aber auch von Hand geführt werden. Die Anordnung der Fügeelektrodenhalter 4a, 4b zueinander kann aber auch veränderlich sein, beispielsweise in dem je ein Fügeelektrodenhalter 4a, 4b von einem Schweißroboter 13 geführt wird. Es ist für die gegenständliche Erfindung auch unerheblich, ob die Fügeelektrodenhalter 4a, 4b bezogen auf die Fügerichtung hintereinander, nebeneinander oder sonst irgendwie versetzt zu einander angeordnet sind.

Ein Lichtbogenfügeverfahren implementiert einen Lichtbogenfügeprozess. Als Lichtbogenfügeprozess wird der zeitliche Verlauf des Fügestromes und/oder der Fügespannung, sowie der zeitliche Verlauf der Drahtvorschubgeschwindigkeit verstanden. Diese zeitlichen Verläufe sind zur Umsetzung des jeweiligen Lichtbogenfügeprozesses vorgegeben, beispielsweise in Form eines Fügeprogramms auf einem Fügegerät 1a, 1b oder durch Einstellungen auf einem Fügegerät 1a, 1b.

Fig.2 zeigt als mögliche Ausgestaltung ein Mehrfach-Lichtbogenfügeverfahren mit Lichtbogenfügeprozessen, bei dem mit den Fügegeräten 1a, 1b jeweils ein Impuls-Lichtbogenfügeprozessimplementiert wird. Die Impuls-Lichtbogenfügeprozesse werden anhand der Verläufe der über die Fügeelektroden 16a, 16b fließenden Fügeströme $I_{Fa}$, $I_{Fb}$ über die Zeit t erläutert. Während der Ausführung der Impuls-Lichtbogenfügeprozess mittels der Fügegeräte 1a, 1b brennt natürlich zumindest zeitweise ein Lichtbogen 17 zwischen den Fügeelektroden 16a, 16b und dem Werkstück 10.

Im zeitlichen Verlauf der Fügeströme $I_{Fa}$, $I_{Fb}$ der Impuls-Lichtbogenfügeprozesse sind Fügezyklen FZa, FZb vorgesehen, in denen sich ein Grundstrom $I_{FG}$ und ein demgegenüber erhöhter Impulsstrom $I_{FI}$ zyklisch mit einer vorgegebenen Zyklusfrequenz $f_{Da}$, $f_{Db}$ abwechseln. Die Zyklusfrequenz $f_{Da}$, $f_{Db}$ ergibt sich natürlich als Kehrwert der Periodendauer $t_{Da}$, $t_{Db}$ eines Fügezyklus FZa, FZb bestehend aus einer Grundstromphase mit dem Grundstrom $I_{FG}$ und einer Impulsstromphase mit dem Impulsstrom $I_{FI}$. Während der Impulsstromphase soll vorteilhafterweise ein geschmolzener Tropfen des Fügedrahtes 5a, 5b in die Fügenaht 11 abgelöst werden. Während dem Fügen kann sich die Impulsfrequenz $f_{Da}$, $f_{Db}$ und/oder der Wert des Grundstromes $I_{FG}$ oder des Impulsstromes $I_{FI}$ zumindest eines der Fügeprozesse auch ändern. Die Zyklusfrequenz $f_D$ eines Impuls-Lichtbogenfügeprozesses liegt typischerweise im Bereich von 5Hz bis 1kHz.

Es ist natürlich auch denkbar, dass die Dauern einer Impulsstromphase eines Fügezyklus FZ in den Impuls-Lichtbogenfügeprozessen nicht gleich sind (wie in Fig.2) oder dass die Werte des Grundstromes $I_{FG}$ oder des Impulsstromes $I_{FI}$ nicht gleich sind. Ebenso ist es denkbar, dass die Zyklusfrequenzen $f_{Da}$, $f_{Db}$ in zwei Impuls-Lichtbogenfügeprozessen unterschiedlich sind.

Die zeitlichen Verläufe der Fügeströme $I_{Fa}$, $I_{Fb}$ sind in Fig.2 natürlich idealisiert und vereinfacht dargestellt. In echt werden sich natürlich gewisse Stromrampen an den Flanken ergeben. Ebenso ist es oftmals vorgesehen, dass die Fügeströme $I_{Fa}$, $I_{Fb}$ beim Übergang vom Impulsstrom $I_{FI}$ zum Grundstrom $I_{FG}$ stufenförmig, oder mit einem anderen Stromverlauf, abfällt, um die Tropfenablöse zu unterstützen. Auch sind oftmals in der Grundstromphase kurze Zwischenstromimpulse vorgesehen, um die Prozessstabilität zu erhöhen. Das ändert aber nichts an der Periodendauer $t_D$ eines Fügezyklus FZ und an der sich daraus ergebenden Zyklusfrequenz $f_D$.

Die Drahtvorschubgeschwindigkeiten $v_{Da}$, $v_{Db}$ der am Mehrfach-Lichtbogenfügeverfahren nach Fig.2 beteiligten Impuls-Lichtbogenfügeprozesse, die in Fig.2 nicht dargestellt sind, können vorgegeben sein, beispielsweise an den Fügegeräten 1a, 1b eingestellt. Die Drahtvorschubgeschwindigkeiten $v_{Da}$, $v_{Db}$ können bei der Umsetzung der Impuls-Lichtbogenfügeprozesse aber auch in Abhängigkeit von den Fügeströmen $I_{Fa}$, $I_{Fb}$ vorgegeben werden.

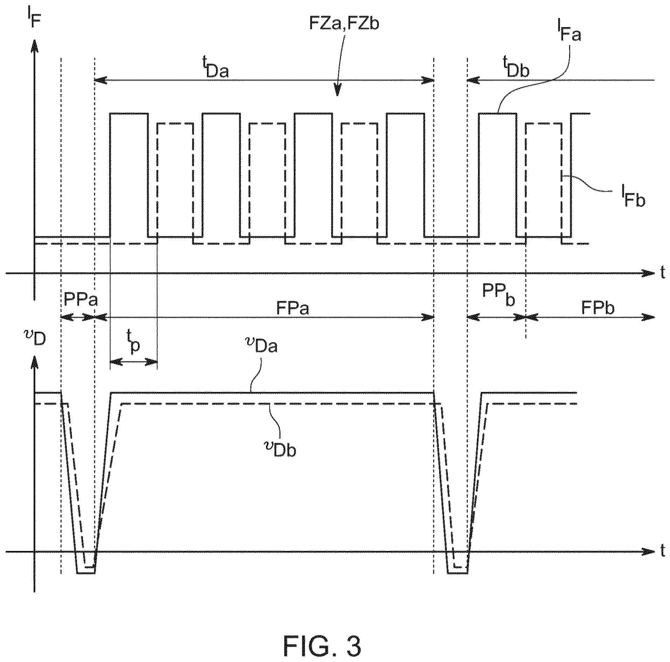

Fig.3 zeigt ein Mehrfach-Lichtbogenfügeverfahren bei dem mit den Fügegeräte 1a, 1b Intervall-Lichtbogenfügeprozesse umgesetzt werden. Bei einem Intervall-Lichtbogenfügeprozess wechseln sich Fügephasen FPa, FPb und Pausenphasen PPa, PPb zyklisch ab, wobei ein Fügezyklus FZa, FZb jeweils aus einer Fügephase FPa, FPb und Pausenphase PPa, PPb besteht. Das ist in Fig.3 anhand der zeitlichen Verläufe der Fügeströme $I_{Fa}$, $I_{Fb}$ am Beispiel eines Mehrfach-Lichtbogenfügeverfahrens mit zwei Intervall-Lichtbogenfügeprozessen dargestellt wird. Im dargestellten Ausführungsbeispiel ist in den Fügephasen FPa, FPb ein gepulster Fügestrom $I_{Fa}$, $I_{Fb}$ vorgesehen, was aber nicht zwingend der Fall sein muss. In einer Pausenphase PPa, PPb ist das Stromniveau der Fügeströme $I_{Fa}$, $I_{Fb}$ gegenüber den Impulsströmen in den Fügephasen FPa, FPb abgesenkt, um den Wärmeeintrag in das Werkstück 10 zu reduzieren, wobei aber weiterhin gefügt wird. In einer Pausenphase PPa, PPb kann es aber auch zeitweise zu einem gezielten Kurzschluss zwischen der Fügeelektrode 16a, 16b und dem Werkstück 10 kommen. Ebenso ist ein Intervall-Lichtbogenfügeprozess denkbar, bei dem der Lichtbogen 17 in einem Fügezyklus FZa, FZb für eine bestimmte Zeit erlischt, auch mehrfach.

Die zeitlichen Verläufe der Fügeströme $I_{Fa}$, $I_{Fb}$ sind in Fig.3 natürlich wieder idealisiert und vereinfacht dargestellt. In echt werden sich natürlich gewisse Stromrampen an den Flanken ergeben. Die zeitlichen Verläufe der Fügeströme $I_{Fa}$, $I_{Fb}$ in den Pausenphasen PPa, PPb und/oder den Fügephasen FPa, FPb können auch anders als in Fig.3 dargestellt sein.

Der Fig.3 ist auch wieder die Periodendauer $t_{Da}$, $t_{Db}$ eines Fügezyklus FZa, FZb zu entnehmen, aus der sich wieder die Zyklusfrequenzen $f_{Da}$, $f_{Db}$ der Fügezyklen FZa, FZb ergeben. Die Zyklusfrequenz $f_D$ eines Intervall-Lichtbogenfügeprozesses liegt typischerweise im Bereich von 0,5Hz bis 100Hz.

In Fig.3 sind zu den Fügezyklen FZa, FZb auch die Drahtvorschubgeschwindigkeiten $v_{Da}$, $v_{Db}$ dargestellt. Man erkennt, dass im gezeigten Ausführungsbeispiel der Drahtvorschub in den Pausenphasen PPa, PPb gestoppt und der Drahtvorschub kurzfristig sogar reversiert wird. Auch dieser zeitliche Verlauf der Drahtvorschubgeschwindigkeiten $v_{Da}$, $v_{Db}$ ist lediglich beispielhaft.

Neben den in Fig.2 und Fig.3 beispielhaft beschriebenen Lichtbogenfügeprozessen kann es noch eine Reihe von anderen Lichtbogenfügeprozessen, auch mit sich zyklisch wiederholenden Fügezyklen FZ, mit vorgegebenen zeitlichen Verläufen eines Fügstromes $I_F$, einer Fügespannung oder einer Drahtvorschubgeschwindigkeit $v_D$ geben. Ein Beispiel für einen Lichtbogenfügeprozess mit sich zyklisch wiederholenden Fügezyklen FZ ist ein Cold Metal Transfer (CMT) Schweißprozess. Bei diesem Schweißprozess wird der Schweißdraht (Fügedraht 5a, 5b) in Richtung Werkstück 10 bewegt, bis sich ein Kurzschluss bildet. Daraufhin wird der Schweißstrom (Fügestrom $I_F$) unterbrochen und der Schweißdraht wird in die entgegengesetzte Richtung zurückbewegt. Durch die Drahtbewegung lösen sich die beim Kurzschluss bildenden Schweißperlen besonders leicht vom Draht ab. Es entstehen nur wenige Spritzer. Dieser Ablauf wird zyklisch wiederholt. Während der Schweißphase kann auch mit impulsförmigen Schweißstrom geschweißt werden. Ein anderes Beispiel ist ein Sprühlichtbogenfügeprozess, bei dem keine Fügezyklen FZ vorgesehen sind, sondern der Fügestrom $I_F$ und auch die Drahtvorschubgeschwindigkeit $v_D$ konstant sind. Mit einem Sprühlichtbogenfügeprozess kann eine besonders hohe Abschmelzleistung realisiert werden. Für die Erfindung werden aber vorzugsweise Lichtbogenfügeprozesse mit sich zyklisch wiederholenden Fügezyklen FZ verwendet.

In einem Mehrfach-Lichtbogenfügeverfahren sind die einzelnen Lichtbogenfügeprozesse in der Regel zeitlich aufeinander synchronisiert, also in einem bestimmten zeitlichen Bezug zu einander stehen. D.h., dass beispielsweise die Fügezyklen FZa, FZb in einem definierten zeitlichen Bezug zu einander stehen. Der zeitliche Bezug wird als Phasenverschiebung $t_p$ (wie in Fig.2 und Fig.3) angegeben, die üblicherweise zwischen 0° und 180° liegt. 0° bezeichnet üblicherweise den Fall, dass zwei Stromflanken zum selben Zeitpunkt beginnen und 180° den Fall, dass zwei Stromflanken maximal beabstandet beginnen.

Verfahren zur Synchronisation der Lichtbogenfügeprozesse sind in den eingangs erwähnten Schriften enthalten. Zur Synchronisation kann zwischen den Fügegeräten 1a, 1b eine Kommunikationsverbindung 14 (drahtgebunden oder drahtlos) vorgesehen sein, über die bedarfsweise eine Synchronisationsinformation SI ausgetauscht wird.

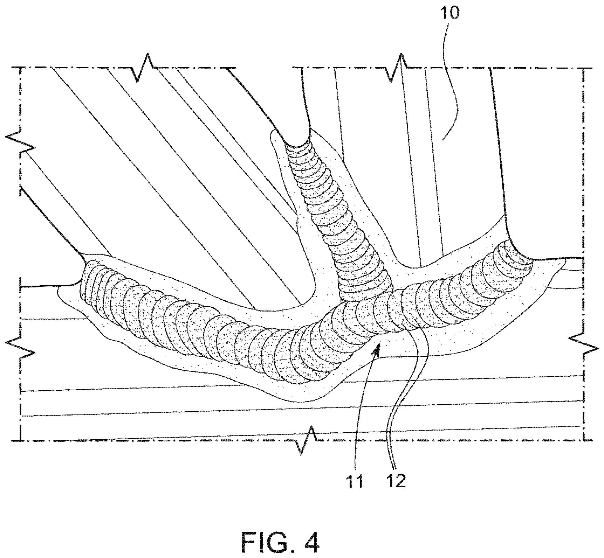

In Fig.4 ist ein geschupptes Nahtbild einer Fügenaht 11 am Beispiel einer Schweißnaht an einem geschweißten Werkstück 10 dargestellt. Man erkennt die sichelmondförmigen Raupen 12 entlang der Fügenaht 11, die das geschuppte Nahtbild erzeugen. Um ein solches geschupptes Nahtbild mit einem Mehrfach-Lichtbogenfügeverfahren herzustellen, wird erfindungsgemäß wie folgt vorgegangen.

Mit dem Mehrfach-Fügeverfahren werden gleichzeitig eine Mehrzahl (zumindest zwei) von Lichtbogenfügeprozessen ausgeführt, um an einem Werkstück 10 eine Fügenaht 11 herzustellen. In jedem Lichtbogenfügeprozess wird zumindest zeitweise eine elektrische Fügespannung an eine Fügeelektrode 16a, 16b angelegt, die entsprechende Fügeströme $I_{Fa}$, $I_{Fb}$ über die Fügeelektrode 16a, 16b verursachen. Während der Ausführung des Mehrfach-Fügeverfahrens brennt in jedem der beteiligten Lichtbogenfügeprozesse zumindest zeitweise ein Lichtbogen 17 zwischen den Fügeelektroden 16a, 16b und dem Werkstück 10 und es fließt dabei zumindest zeitweise ein elektrischer Fügestrom $I_{Fa}$, $I_{Fb}$ über die jeweilige Fügeelektrode 16a, 16b. Außerdem wird dabei ein Fügedraht 5a, 5b mit einer Drahtvorschubgeschwindigkeit $v_{Da}$, $v_{Db}$ in Richtung Lichtbogen 17 bewegt. Jeder beteiligte Lichtbogenfügeprozess wird mit einem vorgegebenen zeitlichen Verlauf des Fügestromes $I_{Fa}$, $I_{Fb}$ und der Drahtvorschubgeschwindigkeit $v_{Da}$, $v_{Db}$ ausgeführt. In jedem beteiligten Lichtbogenfügeprozess wird zumindest ein, eine von der Drahtvorschubgeschwindigkeit $v_{Da}$, $v_{Db}$ und dem Fügedraht 5a, 5b abhängige Abschmelzleistung A des Lichtbogenfügeprozesses beeinflussender Fügeparameter mit einer periodischen Variationsfunktion $V_a$, $V_b$ mit einer Variationsfrequenz fv variiert, sodass in jedem Lichtbogenfügeprozess der vorgegebene zeitliche Verlauf der Drahtvorschubgeschwindigkeit $v_{Da}$, $v_{Db}$ und der vorgegebene zeitliche Verlauf des Fügestromes $I_{Fa}$, $I_{Fb}$ in Abhängigkeit von der Variationsfunktion $V_a$, $V_b$ periodisch variiert wird. Durch die periodische Variation werden die eigentlichen durch die implementierten Lichtbogenfügeprozesse vorgegebenen zeitlichen Verläufe des Fügestromes $I_{Fa}$, $I_{Fb}$ und der Drahtvorschubgeschwindigkeit $v_{Da}$, $v_{Db}$ verändert. Es wird damit zumindest teilweise mit anderen Fügeparametern gefügt, als durch die Lichtbogenfügeprozesse vorgesehen.

Erfindungsgemäß wird die Abschmelzleistung der am Mehrfach-Lichtbogenfügeverfahren beteiligten Lichtbogenfügeprozesse mit einer vorgegebenen Variationsfrequenz fv zyklisch variiert. Vorzugsweise werden die Drahtvorschubgeschwindigkeiten $v_{Da}$, $v_{Db}$ und die Fügeströme $I_{Fa}$, $I_{Fb}$ zyklisch von den vorgegebenen Drahtvorschubgeschwindigkeiten $v_{Da}$, $v_{Db}$ und Fügeströmen $I_{Fa}$, $I_{Fb}$ abgesenkt und wieder auf die vorgegebenen Drahtvorschubgeschwindigkeiten $v_{Da}$, $v_{Db}$ und Fügeströme $I_{Fa}$, $I_{Fb}$ erhöht. Die Drahtvorschubgeschwindigkeiten $v_{Da}$, $v_{Db}$ und die Fügeströme $I_{Fa}$, $I_{Fb}$ variieren damit vorzugsweise zwischen den für den jeweils ausgeführten Lichtbogenfügeprozess vorgegebenen Werte und demgegenüber niedrigeren Werten. Anstelle eines Absenkens ist durch die Variation aber grundsätzlich auch ein Erhöhen möglich. Ebenso ist es möglich, dass durch die Variation abgesenkt und erhöht wird.

Die Variation erfolgt aber nicht sprunghaft zwischen diesen Werten, sondern verlaufend gemäß der vorgegebenen periodischen Variationsfunktion V(fv).

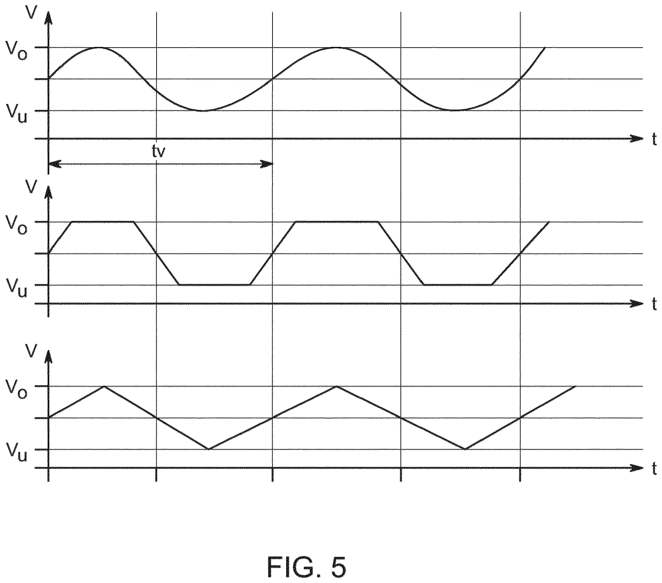

Die periodische Variationsfunktion V(fv) ist beispielsweise eine Sinus-oder Cosinusfunktion, eine Trapezfunktion oder eine Dreiecksfunktion, wie in Fig.5 beispielhaft dargestellt, oder eine andere periodische Funktion mit über die Zeit innerhalb einer Periodendauer tv verlaufendem Amplitudenverlauf. Die Periodendauer tv der Variationsfunktion V(fv) ergibt die Variationsfrequenz fv.

Die Amplitude der periodischen Variationsfunktion V(fv) variiert vorzugsweise zwischen einem oberen Variationswert $V_o$ und einem unteren Variationswert $V_u$. Wie die Variation realisiert wird, spielt keine Rolle.

Die Variationsfunktion V kann beispielsweise auf Eins normiert sein. Der Wert Eins der Variationsfunktion V entspricht dann einer Überlagerung, die den vorgegebenen Wert der Drahtvorschubgeschwindigkeit $v_{Da}$, $v_{Db}$ oder des Fügestromes $I_{Fa}$, $I_{Fb}$ ergibt. Der untere Variationswert $V_u$ ist größer als Null, vorzugsweise im Bereich von 0,1 bis 1. Der oberer Variationswert $V_o$ ist vorzugsweise Eins, kann aber im Bereich von Eins bis 10 gewählt werden. Die Variationsfunktion V kann aber auch in Prozent angegeben werden, wobei 100% einer Überlagerung entspricht, die den vorgegebenen Wert der Drahtvorschubgeschwindigkeit $v_{Da}$, $v_{Db}$ oder des Fügestromes $I_{Fa}$, $I_{Fb}$ ergibt. Ebenso könnte die Variationsfunktion V direkt Werten der der Drahtvorschubgeschwindigkeit $v_{Da}$, $v_{Db}$ oder des Fügestromes $I_{Fa}$, $I_{Fb}$ entsprechen.

Die Variationsfrequenz fv ist so gewählt, dass im Falle eines Mehrfach-Lichtbogenfügeverfahrens mit Lichtbogenfügeprozessen mit Fügezyklen FZ die kleinste Zyklusfrequenz $f_D$ eines Fügezykluses eines Lichtbogenfügeprozesses des Mehrfach-Lichtbogenfügeverfahrens mindestens doppelt so groß ist wie die Variationsfrequenz $f_V$. Vorzugsweise ist die kleinste Zyklusfrequenz $f_D$ eines Lichtbogenfügeprozesses des Mehrfach-Lichtbogenfügeverfahrens das 2-fache bis 50-fache der Variationsfrequenz $f_V$. Im Falle eines Mehrfach-Lichtbogenfügeverfahrens mit Lichtbogenfügeprozessen ohne Fügezyklen, wie beispielsweise bei eine Sprühlichtbogenprozess, wird Variationsfrequenz fv vorzugsweise zwischen 0,1 Hz und 25 Hz gewählt. Grundsätzlich kann gesagt werden, dass je höher die Variationsfrequenz fv gewählt wird, desto feinschuppiger wird die Fügenaht 11, und umgekehrt.

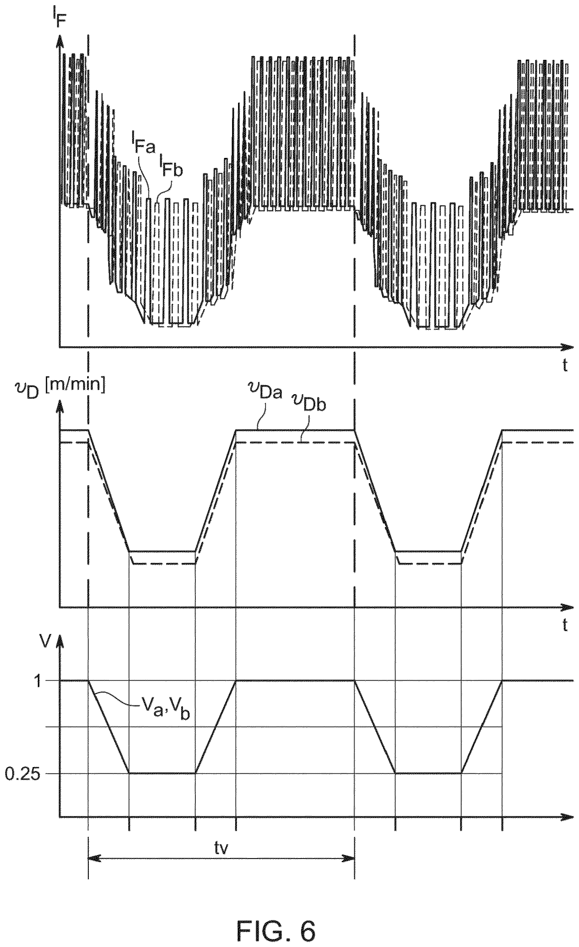

Für jeden am Mehrfach-Lichtbogenfügeverfahren beteiligten Lichtbogenfügeprozess gibt es eine solche Variationsfunktion V(fV), wobei aber alle Variationsfunktionen $V_a(f_V)$, $V_b(f_V)$ die gleiche Variationsfrequenz fv haben. Die Variationsfunktionen $V_a(f_V)$, $V_b(f_V)$ müssen nicht zwingend gleich sein, solange die Variationsfrequenz fv gleich ist. Die Variationsfunktionen $V_a(f_V)$, $V_b(f_V)$ der beteiligten Lichtbogenfügeprozesse sind vorzugsweise auch zeitlich aufeinander synchronisiert, d.h. sie stehen in einem vorgegebenen zeitlichen Bezug zueinander. Die Phasenverschiebung $t_{pV}$ (siehe beispielsweise Fig.6) der periodischen Variationsfunktionen $V_a(f_V)$, $V_b(f_V)$ der beteiligten Lichtbogenfügeprozesse liegt vorzugsweise im Bereich von 0° bis maximal 180°, vorzugsweise maximal 30°. Durch die Synchronisation der Variationsfunktionen $V_a(f_V)$, $V_b(f_V)$ kann sichergestellt werden, dass sich der zeitliche Bezug der Variationsfunktionen $V_a(f_V)$, $V_b(f_V)$ nicht verändert, sondern während der Ausführung des Mehrfach-Lichtbogenfügeverfahrens gleichbleibt, was für bessere Fügeergebnisse sorgt.

Die Abschmelzleistung A eines Lichtbogenfügeprozesses mit einem Fügedraht 5a, 5b ist abhängig von der

$$A = \frac{v_D \cdot G_F \cdot 60}{1000}$$

Drahtvorschubgeschwindigkeit $v_{Da}$, $v_{Db}$ und vom Fügedraht 5a, 5b und ist beispielsweise definiert als . Darin bezeichnet $v_D$ die jeweilige Drahtvorschubge-schwindigkeit $v_{Da}$, $v_{Db}$ in m/min und $G_F$ das spezifische Fügedrahtgewicht des Fügedrahtes 5a, 5b in g/m. Nachdem der für den Lichtbogenfügeprozess verwendete Fügedraht 5a, 5b bekannt ist, kennt man natürlich auch das spezifische Fügedrahtgewicht.

Anhand dieser Formel ist ersichtlich, dass die Abschmelzleistung A eines Lichtbogenfügeprozesses über die Drahtvorschubgeschwindigkeit $v_{Da}$, $v_{Db}$ beeinflusst werden kann. Nachdem in einem Lichtbogenfügeprozess die Drahtvorschubgeschwindigkeit $v_{Da}$, $v_{Db}$ und der Fügestrom $I_{Fa}$, $I_{Fb}$ voneinander abhängig sind und diese Abhängigkeit bekannt oder vorgegeben ist, kann die Abschmelzleistung A auch über den Fügestrom $I_{Fa}$, $I_{Fb}$ beeinflusst werden, da eine Variation des Fügestromes $I_{Fa}$, $I_{Fb}$ aufgrund der Abhängigkeit eine Variation der Drahtvorschubgeschwindigkeit $v_{Da}$, $v_{Db}$ zur Folge hat. Üblicherweise steigt der Fügestrom $I_{Fa}$, $I_{Fb}$ mit einem bekannten Verhältnis mit größer werdenden Drahtvorschubgeschwindigkeit $v_{Da}$, $v_{Db}$ an. Nachdem der Fügestrom $I_{Fa}$, $I_{Fb}$ natürlich von der an den Fügedraht 5a, 5b angelegten Fügespannung bestimmt wird, kann die Abschmelzleistung A nicht zuletzt auch mit der Fügespannung beeinflusst werden.

Folglich sind der Fügestrom $I_{Fa}$, $I_{Fb}$, die Drahtvorschubgeschwindigkeit $v_{Da}$, $v_{Db}$ und die Fügespannung mögliche, die Abschmelzleistung A des Lichtbogenfügeprozesses beeinflussende Fügeparameter.

Der Fügestrom $I_{Fa}$, $I_{Fb}$ und die Drahtvorschubgeschwindigkeit $v_{Da}$, $v_{Db}$ sind in einem Lichtbogenfügeprozess in der Regel über eine vorgegebene Kennlinie, die die Abhängigkeit definiert, miteinander verbunden. Damit führt die Variation des Fügestromes $I_{Fa}$, $I_{Fb}$ in der Regel auch zu einer Variation der Drahtvorschubgeschwindigkeit $v_{Da}$, $v_{Db}$, und auch umgekehrt.

Das wird in Fig.6 am Ausführungsbeispiel eines Mehrfach-Lichtbogenfügeverfahrens mit zwei Impuls-Lichtbogenfügeprozessen (wie mit Fig.2 beschrieben) erläutert.

Das obere Diagramm in Fig.6 zeigt den zeitlichen Verlauf der Fügeströme $I_{Fa}$, $I_{Fb}$ der beiden Impuls-Lichtbogenfügeprozesse, das mittlere Diagramm den zeitlichen Verlauf der Drahtvorschubgeschwindigkeiten $v_{Da}$, $v_{Db}$ der beiden Impuls-Lichtbogenfügeprozesse und das untere Diagramm die verwendeten Variationsfunktionen $V_a(f_V)$, $V_b(f_V)$. Die Impulsfrequenzen $f_{Da}$, $f_{Db}$ der Impuls-Lichtbogenfügeprozesse sind in diesem Ausführungsbeispiel ungefähr das 30-fache der Variationsfrequenz fv der Variationsfunktionen $V_a(f_V)$, $V_b(f_V)$. In diesem Ausführungsbeispiel sind die Variati-onsfunktionen $V_a(f_V)$, $V_b(f_V)$ auf Eins normiert und trapezförmig und die Amplitude der Variationsfunktionen $V_a(f_V)$, $V_b(f_V)$ variiert zwischen 0,25 und 1. Die Drahtvorschubgeschwindigkeiten $v_{Da}$, $v_{Db}$ der beiden Impulsfügeprozesse werden mit der jeweiligen Variationsfunktion $V_a(f_V)$, $V_b(f_V)$ überlagert, sodass die Drahtvorschubgeschwindigkeiten $v_{Da}$, $v_{Db}$ mit der Variationsfrequenz fv = 1/tv gemäß der Amplitude der Variationsfunktionen $V_a(f_V)$, $V_b(f_V)$ variiert wird, und zwar zwischen $v_{Da}$, $v_{Db}$ und 0,25·$v_{Da}$, 0,25·$v_{Db}$. In diesem Ausführungsbeispiel werden die Drahtvorschubgeschwindigkeiten $v_{Da}$, $v_{Db}$ folglich vom vorgegebenen Wert zyklisch auf ein Viertel des vorgegebenen Wertes abgesenkt. Nachdem die Fügeströme $I_{Fa}$, $I_{Fb}$ von den Drahtvorschubgeschwindigkeiten $v_{Da}$, $v_{Db}$ abhängig sind, werden folglich auch die Fügeströme $I_{Fa}$, $I_{Fb}$ beeinflusst und in diesem Ausführungsbeispiel gemäß der vorgegebenen Abhängigkeit zwischen Drahtvorschubge-schwindigkeit und Fügestrom zyklisch abgesenkt. Auf diese Weise wird die Abschmelzleistung A der Impuls-Lichtbogenfügeprozesse zyklisch mit der Variationsfrequenz fv variiert, was zum gewünschten geschuppten Nahtbild führt.

Alternativ könnte man die Variationsfunktionen $V_a(f_V)$, $V_b(f_V)$ auch direkt als Werte für die Drahtvorschubge-schwindigkeit $v_{Da}$, $v_{Db}$ und/oder die Fügeströme $I_{Fa}$, $I_{Fb}$ vorgeben, beispielsweise als Werte der Drahtvorschubgeschwindigkeit $v_{Da}$, $v_{Db}$ zwischen 6 m/min und 12 m/min. "Variieren" bedeutet in diesem Zusammenhang, dass die vorgegebenen Werte für die Drahtvorschubgeschwindigkeit $v_{Da}$, $v_{Db}$ und/oder die Fügeströme $I_{Fa}$, $I_{Fb}$ durch die Werte der Variations-funktionen $V_a(f_V)$, $V_b(f_V)$ ersetzt werden.

In Fig.6 ist ferner zu erkennen, dass in diesem Ausführungsbeispiel auch die Zyklusfrequenzen $f_{Da}$, $f_{Db}$ der Lichtbogenfügeprozesse von den Drahtvorschubgeschwindigkeiten $v_{Da}$, $v_{Db}$ abhängig sind. In diesem Beispiel werden die Zyklusfrequenzen $f_{Da}$, $f_{Db}$ der Lichtbogenfügeprozesse mit sinkenden Drahtvorschubgeschwindigkeiten $v_{Da}$, $v_{Db}$ ebenfalls abgesenkt. Die Zyklusfrequenzen $f_{Da}$, $f_{Db}$ der Lichtbogenfügeprozesse bleiben dabei aber immer noch deutlich größer als die Variationsfrequenz fv der Variationsfunktionen $V_a(f_V)$, $V_b(f_V)$.

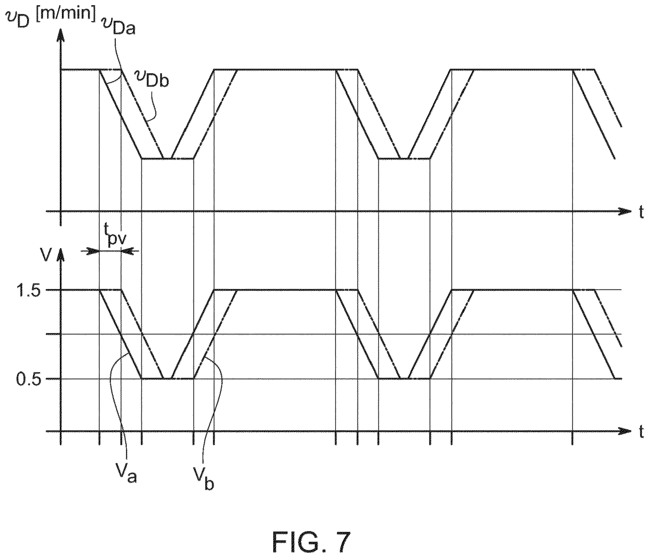

Im in Fig.6 gezeigten Ausführungsbeispiel sind die Variationsfunktionen $V_a(f_V)$, $V_b(f_V)$ mit einer Phasenverschiebung $t_{pV}$ von 0° zeitlich aufeinander synchronisiert. Es könnte aber auch eine Phasenverschiebung >0° (aber max. 180°) vorgesehen sein, wie in Fig.7 dargestellt. In Fig.7 sind der Einfachheit halber nur die Variationsfunktionen $V_a(f_V)$, $V_b(f_V)$ und die Drahtvorschubgeschwindigkeiten $v_{Da}$, $v_{Db}$ dargestellt.

Die zeitliche Synchronisation der Variationsfunktionen $V_a(f_V)$, $V_b(f_V)$ der am Mehrfach-Lichtbogenfügeverfahren beteiligten Lichtbogenfügeprozesse kann wie die Synchronisation der Fügeprozesse selbst erfolgen. Die Fügegeräte 1a, 1b tauschen zur Synchronisation der Variationsfunktionen $V_a(f_V)$, $V_b(f_V)$ eine Synchronisationsinformation SV aus, entweder einmalig oder wiederkehrend. Hierfür kann eine Kommunikationsverbindung 14 zwischen den beteiligten Fügegeräten 1a, 1b, vorzugsweise zwischen den Steuereinheiten 7a, 7b der Fügegeräte 1a, 1b, vorgesehen sein, wie in Fig.1 dargestellt. Die Kommunikationsverbindung 14 kann drahtgebunden oder drahtlos sein.

Die Kommunikationsverbindung 14 ist im einfachsten Fall eine elektrische Leitung auf der als Synchronisationsinformation SV von einem sendenden Fügegerät 1a, 1b ein elektrischer Strompuls und/oder Spannungspuls auf ein empfangendes Fügegerät 1a, 1b übertragen wird. Als Synchronisationsinformation SV kann aber auch ein bestimmtes Signalmuster oder eine Signalfrequenz genutzt werden, oder auch jede andere über die Kommunikationsverbindung 14 übertragbare Information.

Die Kommunikationsverbindung 14 kann auch als Datenbus ausgestaltet sein. In diesem Fall ist auf dem Datenbus ein Datenkommunikationsprotokoll implementiert und die Synchronisationsinformation SV wird gemäß dem Datenkommunikationsprotokoll von einem sendenden Fügegerät 1a, 1b auf ein empfangendes Fügegerät 1a, 1b übertragen, beispielsweise in einer Busnachricht des Datenkommunikationsprotokolls. Welches Fügegerät 1a, 1b das sendend und welches das empfangende ist, kann vorgegeben sein. Im Falle von mehr als zwei Fügegeräten 1a, 1b ist aber üblicherweise nur eines das sendende Fügegerät 1a, 1b und die anderen die empfangenden Fügegeräte.

Bei einem Mehrfach-Lichtbogenfügeverfahren mit synchronisierten Lichtbogenfügeprozessen sind somit zusätzlich auch die Variationsfunktionen $V_a(f_V)$, $V_b(f_V)$ der beteiligten Lichtbogenfügeprozesse synchronisiert. Eine optionale Synchronisation der Lichtbogenfügeprozesse und eine Synchronisation der Variationsfunktionen $V_a(f_V)$, $V_b(f_V)$ kann aber unabhängig voneinander erfolgen. Die Variationsfunktionen $V_a(f_V)$, $V_b(f_V)$ könnten aber auch auf die Lichtbogenfügeprozesse zeitlich synchronisiert sein.

Wie die Variation der Drahtvorschubgeschwindigkeiten $v_{Da}$, $v_{Db}$ oder der Fügeströme $I_{Fa}$, $I_{Fb}$ oder der Fügespannungen, oder eines anderen, die Abschmelzleistung A (auch indirekt) beeinflussenden Fügeparameters (beispielsweise eine Zyklusfrequenz $f_{Da}$, $f_{Db}$) eines Lichtbogenfügeprozesses durch die Variationsfunktionen $V_a(f_V)$, $V_b(f_V)$ umgesetzt wird, spielt für die Erfindung keine Rolle. Es gibt verschiedene mögliche Ausführungsvarianten für Variation eines die Abschmelzleistung A beeinflussenden Fügeparameters.

Ein die Abschmelzleistung A (auch indirekt) beeinflussender Fügeparameter ist insbesondere eine Drahtvorschubgeschwindigkeit $v_{Da}$, $v_{Db}$, ein Fügestrom $I_{Fa}$, $I_{Fb}$, eine Fügespannung oder eine Zyklusfrequenz $f_{Da}$, $f_{Db}$.

Beispielsweise könnte der zu beeinflussende Fügeparameter mit der zugehörigen Variationsfunktion $V_a(f_V)$, $V_b(f_V)$ zu jedem betrachteten Zeitpunkt multipliziert werden. Das bietet sich insbesondere bei auf Eins normierten Variationsfunktionen $V_a(f_V)$, $V_b(f_V)$ an, oder bei Variationsfunktionen $V_a(f_V)$, $V_b(f_V)$, die in Prozent ausgedrückt werden. Auf diese Weise erhält man zu jedem Zeitpunkt die benötigten Werte der Fügeparameter.

Es ist aber denkbar, in den Fügegeräten 1a, 1b für ein Mehrfach-Lichtbogenfügeverfahren die für die Umsetzung der Lichtbogenfügeprozesse benötigten Werte der Fügeparameter in Tabellenform zu hinterlegen. Das bietet sich insbesondere an, wenn die Variationsfunktionen $V_a(f_V)$, $V_b(f_V)$ Werte für den Fügeparameter vorgeben.

Eine solche Tabelle kann für einen Impuls-Lichtbogenfügeprozess wie in Fig.2 dargestellt wie nachfolgend in Tabelle 1 angeführt aufgebaut sein.

Tabelle 1

| $v_D$ | $f_D$ | $I_{FI}$ | $I_{FG}$ | $T_P$ | ... |
|---|---|---|---|---|---|
| $V_{Dmin}$ z.B. 2 m/min | $f_{Dmin}$ z.B. 15 Hz | $I_{FImin}$ z.B. 425 A | $I_{FGmin}$ z.B. 15 A | $T_{Pminx}$ z.B. 1,5 ms | |
| ... | ... | ... | ... | ... | |
| $V_{Dmax}$ z.B. 20 m/min | $f_{Dmax}$ z.B. 400 Hz | $I_{FImax}$ z.B. 550 A | $I_{FGmax}$ z.B. 175 A | $T_{Pmax}$ z.B. 2 ms | |

Die Variationsfrequenz fv und die Anzahl der Zeilen in der Tabelle bestimmt dann in welchem zeitlichen Abstand jeweils neue Werte der Fügeparameter, in diesem Beispiel der Drahtvorschubgeschwindigkeit $v_D$, der Zyklusfrequenz $f_D$, des Fügestromes $I_F$ (hier in Form des Grundstromes $I_{FG}$ und des Pulsstromes $I_{FI}$), der Pulsdauer $T_P$ eines Strompulses und eventuell weiterer Fügeparameter, aus der Tabelle entnommen und für die Steuerung des Lichtbogenfügeprozesses verwendet werden. Zwischen Werten in der Tabelle kann bedarfsweise interpoliert oder extrapoliert werden.

Es ist damit auch möglich, für verschiedene Lichtbogenfügeprozesse verschiedene Tabellen zu hinterlegen. Bei der Umsetzung eines Lichtbogenfügeprozesses ist dann nur mehr die richtige Tabelle auszuwählen.

Die Werte der Tabelle können vorab ermittelt werden, beispielsweise anhand von Tests von Mehrfach-Lichtbogenfügeverfahren mit den Fügegeräten 1a, 1b. Das kann beispielsweise vom Hersteller der Fügegeräte 1a, 1b gemacht werden und in den Fügegeräten 1a, 1b hinterlegt werden.

Eine derartige Tabelle kann aber auch von anderen Parametern abhängig gemacht werden, beispielsweise von einer Fügegeschwindigkeit, die beispielsweise angibt wie schnell die Elektrodenhalter 4a, 4b bewegt werden. Die Fügegeschwindigkeit kann Fügeparameter natürlich beeinflussen, sodass es für verschiedene Fügegeschwindigkeiten verschiedene Tabellen mit Fügeparametern geben kann. Je nach aktueller Fügegeschwindigkeit können die benötigten Fügeparameter dann aus der zugeordneten Tabelle entnommen werden.

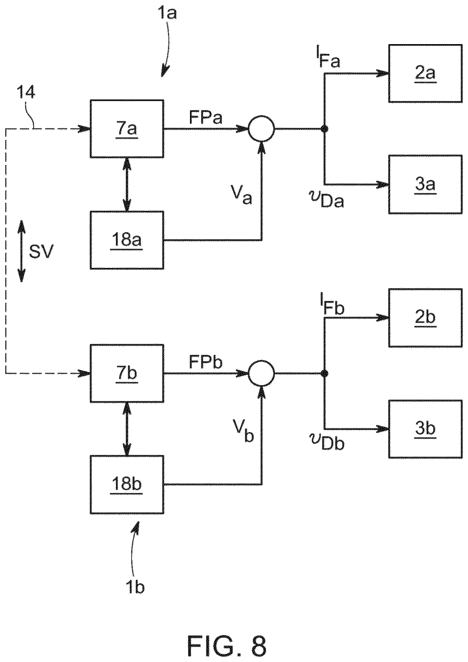

Das erfindungsgemäße Vorgehen wird nochmals anhand der Fig.8 erläutert, am Beispiel einer Fügeanordnung 15 zur Durchführung eines Mehrfach-Lichtbogenfügeverfahrens, im gezeigten Ausführungsbeispiel mit zwei Lichtbogenfügeverfahren, die jeweils mit einem Fügegerät 1a, 1b einen Lichtbogenfügeprozess umsetzen. Die Fügegeräte 1a, 1b sind nur so weit erforderlich dargestellt. Jeder Lichtbogenfügeprozess wird von der zugehörigen Steuereinheit 7a, 7b durch vorgegebene, zeitliche Verläufe von Fügeparametern FPa, FPb gesteuert. Die zeitlichen Verläufe der Fügeparameter FPa, FPb werden in diesem Ausführungsbeispiel aus einer Speichereinheit 18a, 18b des zugehörigen Fügegeräts 1a, 1b ausgelesen, wobei diese zeitlichen Verläufe aber auch aus anderen Quellen stammen können. Die Fügeparameter FPa, FPb umfassen zumindest die Fügeströme $I_{Fa}$, $I_{Fb}$ und die Drahtvorschubgeschwindigkeiten $v_{Da}$, $v_{Db}$. Diese Fügeparameter FPa, FPb sind in vorgegebener Weise voneinander abhängig, sodass eine Änderung eines dieser Fügeparameters FPa, FPb eine Änderung des anderen Fügeparameters FPa, FPb zur Folge hat. Zu jedem Lichtbogenfügeprozess ist auch eine periodische Variationsfunktion $V_a(f_V)$, $V_b(f_V)$ vorgegeben, beispielsweise in der zugehörigen Speichereinheit 18a, 18b hinterlegt, wie in der Ausgestaltung der Fig.8. In jedem Lichtbogenfügeprozess wird zumindest einer der zum jeweiligen Lichtbogenfügeprozess zugehörigen Fügeparameter FPa, FPb, der eine von der Drahtvorschubgeschwindigkeit $v_{Da}$, $v_{Db}$ und dem Fügedraht 5a, 5b abhängige Abschmelzleistung A des Lichtbogenfügeprozesses beeinflusst, mit der zugehörigen periodischen Variationsfunktion $V_a(f_V)$, $V_b(f_V)$ mit einer Variationsfrequenz fv variiert. Diese Variation kann in der jeweiligen Steuereinheit 7a, 7b erfolgen. Als Folge dieser Variation wird in jedem Lichtbogenfügeprozess der vorgegebene zeitliche Verlauf der Drahtvorschubgeschwindigkeit $v_{Da}$, $v_{Db}$ beeinflusst und damit aufgrund der vorgegebenen Abhängigkeit auch der vorgegebene zeitliche Verlauf des Fügestromes $I_{Fa}$, $I_{Fb}$ beeinflusst. Diese Beeinflussung erfolgt periodisch in Abhängigkeit von der Variationsfunktion $V_a(f_V)$, $V_b(f_V)$. Die Lichtbogenfügeprozesse werden mit diesen variierten zeitlichen Verläufen der Drahtvorschubgeschwindigkeit $v_{Da}$, $v_{Db}$ und des Fügestromes $I_{Fa}$, $I_{Fb}$ ausgeführt. D.h. beispielsweise, dass die Stromquellen 2a, 2b angesteuert werden, um die zeitlichen Verläufe der Fügeströme $I_{Fa}$, $I_{Fb}$, und gegebenenfalls auch andere Fügeparameter FPa, FPb, zu erzeugen und die Drahtvorschubeinheiten 3a, 3b angesteuert werden, um die zeitlichen Verläufe der Drahtvorschubgeschwindigkeiten $v_{Da}$, $v_{Db}$ zu erzeugen.

Durch die periodische Variation mit den Variationsfunktionen $V_a(f_V)$, $V_b(f_V)$ werden die eigentlichen durch die implementierten Lichtbogenfügeprozesse vorgegebenen zeitlichen Verläufe des Fügestromes $I_{Fa}$, $I_{Fb}$ und der Drahtvorschubgeschwindigkeit $v_{Da}$, $v_{Db}$ verändert. Es wird damit zumindest teilweise mit anderen Fügeparametern FPa, FPb gefügt, als durch die Lichtbogenfügeprozesse vorgesehen ist.

In Fig.8 ist auch ersichtlich, dass die Variationsfunktionen $V_a(f_V)$, $V_b(f_V)$ zeitlich zueinander synchronisiert werden können. Hierzu können die Steuereinheiten 7a, 7b auch eine Synchronisationsinformation SV austauschen, wie oben beschrieben.

## Patentansprüche

1. Mehrfach-Lichtbogenfügeverfahren mit dem gleichzeitig eine Mehrzahl von Lichtbogenfügeprozessen ausgeführt wird, um an einem Werkstück (10) eine Fügenaht (11) herzustellen, wobei während der Ausführung des Mehrfach-Lichtbogenfügeverfahrens zur Umsetzung jedes der beteiligten Lichtbogenfügeprozesses zumindest zeitweise ein Lichtbogen (17) zwischen einer Fügeelektrode (16a, 16b) und dem Werkstück (10) brennt und zumindest zeitweise ein elektrischer Fügestrom ($I_{Fa}$, $I_{Fb}$) über die Fügeelektrode (16a, 16b) fließt und ein Fügedraht (5a, 5b) mit einer Drahtvorschubgeschwindigkeit ($v_{Da}$, $v_{Db}$) zum Lichtbogen (17) bewegt wird, wobei jeder der beteiligten Lichtbogenfügeprozesse mit einem vorgegebenen zeitlichen Verlauf von Fügeparametern (FPa, FPb) ausgeführt wird und der zeitliche Verlauf der Fügeparameter (FPa, FPb) zumindest einen vorgegebenen zeitlichen Verlauf des Fügestromes ($I_{Fa}$, $I_{Fb}$) und einen vorgegebenen zeitlichen Verlauf der Drahtvorschubgeschwindigkeit ($v_{Da}$, $v_{Db}$), die voneinander abhängig sind, umfassen, **dadurch gekennzeichnet dass** in jedem Lichtbogenfügeprozess zumindest ein Fügeparameter (FPa, FPb), der eine von der Drahtvorschubgeschwindigkeit ($v_{Da}$, $v_{Db}$) und dem Fügedraht (5a, 5b) abhängige Abschmelzleistung A des Lichtbogenfügeprozesses beeinflusst, mit einer periodischen Variationsfunktion ($V_a$, $V_b$) mit einer Variationsfrequenz (fv) variiert wird, sodass in Folge dieses Variierens in jedem Lichtbogenfügeprozess der vorgegebene zeitliche Verlauf der Drahtvorschubgeschwindigkeit ($v_{Da}$, $v_{Db}$) und der vorgegebene zeitliche Verlauf des Fügestromes ($I_{Fa}$, $I_{Fb}$) in Abhängigkeit von der Variationsfunktion ($V_a$, $V_b$) periodisch variiert wird.

2. Mehrfach-Lichtbogenfügeverfahren nach Anspruch 1, **dadurch gekennzeichnet, dass** jeder beteiligte Lichtbogenfügeprozess mit vorgegebenen zyklisch mit einer Zyklusfrequenz ($f_{Da}$, $f_{Db}$) wiederholten Fügezyklen (FZa, FZb) ausgeführt wird und die kleinste Zyklusfrequenz ($f_{Da}$, $f_{Db}$) eines Lichtbogenfügeprozesses das 2-fache bis 50-fache der Variationsfrequenz (fv) beträgt.

3. Mehrfach-Lichtbogenfügeverfahren nach Anspruch 1 oder 2, **dadurch gekennzeichnet, dass** die Variationsfunktionen ($V_a$, $V_b$) der Lichtbogenfügeprozesse zeitlich aufeinander synchronisiert werden.

4. Mehrfach-Lichtbogenfügeverfahren nach Anspruch 3, **dadurch gekennzeichnet, dass** Variationsfunktionen ($V_a$, $V_b$) mit einer Phasenverschiebung ($t_{pV}$) zwischen 0° und 180° zueinander synchronisiert werden.

5. Mehrfach-Lichtbogenfügeverfahren nach einem der Ansprüche 1 bis 4, **dadurch gekennzeichnet, dass** die Mehrzahl der Lichtbogenfügeprozesse zeitlich aufeinander synchronisiert werden.

6. Mehrfach-Lichtbogenfügeverfahren nach Anspruch 5, **dadurch gekennzeichnet, dass** die Mehrzahl der Lichtbogenfügeprozesse mit einer Phasenverschiebung ($t_p$) zwischen 0° und 180° synchronisiert werden.

7. Fügeanordnung zur Durchführung eines Mehrfach-Lichtbogenfügeverfahren mit einer Mehrzahl von Fügegeräten (1a, 1b), die eingerichtet sind jeweils einen Lichtbogenfügeprozess auszuführen, um bei Verwendung der Fügeanordnung (15) an einem Werkstück (10) eine Fügenaht (11) herzustellen, wobei jedes Fügegerät (1a, 1b) eine Stromquelle (2a, 2b), eine Drahtvorschubeinheit (3a, 3b), eine Steuereinheit (7a, 7b) und eine Fügeelektrode (16a, 16b) umfasst, und jedes Fügegerät (1a, 1b) während der Ausführung des Mehrfach-Lichtbogenfügeverfahrens zur Umsetzung eines der beteiligten Lichtbogenfügeprozesses eingerichtet ist, mit der Stromquelle (2a, 2b) einen über die Fügeelektrode (16a, 16b) fließenden Fügestrom ($I_{Fa}$, $I_{Fb}$) zu erzeugen, sodass zumindest zeitweise ein Lichtbogen (17) zwischen der Fügeelektrode (16a, 16b) und dem Werkstück (10) brennt, und mit der Drahtvorschubeinheit (3a, 3b) einen Fügedraht (5a, 5b) mit einer Drahtvorschubgeschwindigkeit ($v_{Da}$, $v_{Db}$) zum Lichtbogen (17) zu bewegen, und mit der Steuereinheit (7a, 7b) die Stromquelle (2a, 2b) und die Drahtvorschubeinheit (3a, 3b) anzusteuern, um jeden der beteiligten Lichtbogenfügeprozesse mit einem vorgegebenen zeitlichen Verlauf von Fügeparametern (FPa, FPb) auszuführen, wobei der zeitliche Verlauf der Fügeparameter (FPa, FPb) zumindest einen vorgegebene zeitlichen Verlauf des Fügestromes ($I_{Fa}$, $I_{Fb}$) und einen vorgegebenen zeitlichen Verlauf der Drahtvorschubgeschwindigkeit ($v_{Da}$, $v_{Db}$), die voneinander abhängig sind, umfasst, **dadurch gekennzeichnet dass** jedes Fügegerät (1a, 1b) zur Umsetzung des zugehörigen Lichtbogenfügeprozesses eingerichtet ist, mit der Steuereinheit (7a, 7b) im zugehörigen Lichtbogenfügeprozess zumindest einen Fügeparameter (FPa, FPb), der eine von der Drahtvorschubgeschwindigkeit ($v_{Da}$, $v_{Db}$) und dem Fügedraht (5a, 5b) abhängige Abschmelzleistung A des Lichtbogenfügeprozesses beeinflusst, mit einer periodischen Variationsfunktion ($V_a$, $V_b$) mit einer Variationsfrequenz (fv) zu variieren, um in jedem Lichtbogenfügeprozess den vorgegebenen zeitlichen Verlauf der Drahtvorschubgeschwindigkeit ($v_{Da}$, $v_{Db}$) und den vorgegebenen zeitlichen Verlauf des Fügestromes ($I_{Fa}$, $I_{Fb}$) in Abhängigkeit von der Variationsfunktion ($V_a$, $V_b$) periodisch zu variieren.

8. Fügeanordnung nach Anspruch 7, **dadurch gekennzeichnet, dass** jedes Fügegerät (1a, 1b) zur Umsetzung des zugehörigen Lichtbogenfügeprozesses eingerichtet ist, mit der Steuereinheit (7a, 7b) den zugehörigen Lichtbogenfügeprozess mit vorgegebenen zyklisch mit einer Zyklusfrequenz ($f_{Da}$, $f_{Db}$) wiederholten Fügezyklen (FZa, FZb) auszuführen, wobei die kleinste Zyklusfrequenz ($f_{Da}$, $f_{Db}$) der am Mehrfach-Lichtbogenfügeverfahren beteiligten Lichtbogenfügeprozesses das 2-fache bis 50-fache der Variationsfrequenz (fv) beträgt.

9. Fügeanordnung nach Anspruch 7 oder 8, **dadurch gekennzeichnet, dass** die Steuereinheiten (7a, 7b) der zur Umsetzung des Mehrfach-Lichtbogenfügeverfahren beteiligten Fügegeräte (1a, 1b) eingerichtet sind, die Variationsfunktionen ($V_a$, $V_b$) der Lichtbogenfügeprozesse zeitlich aufeinander zu synchronisieren.

10. Fügeanordnung nach Anspruch 9, **dadurch gekennzeichnet, dass** die Steuereinheiten (7a, 7b) der Fügegeräte (1a, 1b) über eine Kommunikationsverbindung (14) miteinander verbunden sind und die Steuereinheiten (7a, 7b) eingerichtet sind, zur Synchronisation der Variationsfunktionen ($V_a$, $V_b$) über die Kommunikationsverbindung (14) eine Synchronisationsinformation (SV) zu übertragen.

11. Fügeanordnung nach einem der Ansprüche 7 bis 10, **dadurch gekennzeichnet, dass** die Steuereinheiten (7a, 7b) der zur Umsetzung des Mehrfach-Lichtbogenfügeverfahren beteiligten Fügegeräte (1a, 1b) eingerichtet sind, die Mehrzahl der Lichtbogenfügeprozesse zeitlich aufeinander zu synchronisieren.

FIG. 1

FIG. 2

FIG. 3

FIG. 4

FIG. 5

FIG. 6

FIG. 7

FIG. 8

Europäisches Patentamt

European Patent Office

Office européen des brevets

**EUROPÄISCHER RECHERCHENBERICHT**

**Nummer der Anmeldung**

**EP 23 16 8435**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 4 806 735 A (DITSCHUN ARTHUR [CA] ET AL) 21. Februar 1989 (1989-02-21) <br> * Spalte 3, Zeilen 44-46; Abbildungen 1,2 * <br> * Spalte 8, Zeilen 22-26 * <br> ----- | 1-11 | INV. <br> B23K9/09 <br> B23K9/095 <br> B23K9/10 <br> B23K9/12 <br> B23K9/173 |
| Y | "Trends in der Entwicklung von Schutzgasschweißgeräten in Japan", SCHWEISSEN UND SCHNEIDEN, DVS, Bd. 67, Nr. 10, 1. Januar 2015 (2015-01-01), Seiten 610-617, XP001596307, <br> * Seite 614, Spalte 2, Zeile 26 – Seite 614, Spalte 3, Zeile 13 * <br> ----- | 1-11 | |
| | | | **RECHERCHIERTE SACHGEBIETE (IPC)** <br><br> B23K |

Der vorliegende Recherchenbericht wurde für alle Patentansprüche erstellt

| Recherchenort | Abschlußdatum der Recherche | Prüfer |
|---|---|---|
| München | 26. September 2023 | Seiderer, Jens |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................................

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 23 16 8435

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-09-2023

| Im Recherchenbericht angeführtes Patentdokument | Datum der Veröffentlichung | Mitglied(er) der Patentfamilie | Datum der Veröffentlichung |
|---|---|---|---|
| US 4806735 A | 21-02-1989 | CA 1313232 C<br>US 4806735 A | 26-01-1993<br>21-02-1989 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 20208187 A1

- WO 2022129122 A1